# EUROPEAN PATENT APPLICATION

(11) **EP 3 395 729 A1**
(43) Date of publication of application: **31.10.2018**
(21) Application number: 17168675.1
(22) Date of filing: 28.04.2017
(51) Int. Cl.: B65G 47/51

(54) **CONTINUOUS CONVEYOR BUFFER FOR A PRODUCTION LINE**

(71) Applicant: Container Machinery Corporation, Kinderhook, NY 12106 (US)
(72) Inventor: The designation of the inventor has not yet been filed
(74) Representative: Grünecker Patent- und Rechtsanwälte PartG mbB

(57) **Abstract**

The invention relates to a continuous conveyor buffer (1) for a production line, the continuous conveyor buffer (1) comprising at least one closed loop conveyor (9), at least one loading section (3) for loading items onto the closed loop conveyor (9), and at least one unloading section (5) for unloading items from the closed loop conveyor (9), the closed loop conveyor (9) comprising a carrier strand extending from the at least one loading section (3) to the at least one unloading section (5) and a return strand extending from the at least one unloading section (5) to the at least one loading section (3), the carrier strand and the return strand together forming the closed loop conveyor (9). In order to provide a conveyor which is capable of balancing differences in the speed of loading and unloading the closed loop conveyor (9), it is intended according to the invention that the continuous conveyor buffer (1) comprises at least one buffer capacity adjustment device (19) with which the length of the carrier strand and the length of the return strand are adjustable relative to each other.

## Description

The invention relates to a continuous conveyor buffer for a production line, the continuous conveyor buffer comprising at least one closed loop conveyor, at least one loading section for loading items onto the closed loop conveyor and at least unloading section for unloading items from the closed loop conveyor, the closed loop conveyor comprising a carrier strand extending from the at least one loading section to the at least one unloading section and a return strand extending from the at least one unloading section to the at least one loading section, the carrier strand and the return strand together forming the closed loop conveyor.

Closed loop conveyors can be used for transporting items such as goods or work pieces either directly or in carrier members from the at least one loading section to the at least one unloading section or the other way round. In a production line, at least one loading member may be attached to the at least one loading section such that items may be fed from the at least one loading member onto the closed loop conveyor. At the least one unloading section, at least one unloading member may be present which is adapted for extracting items from the closed loop conveyor. The loading member may for example be adapted for feeding items which are delivered from a previous section of a production line to the closed loop conveyor. Likewise, the unloading member may be adapted for extracting items from the closed loop conveyor and forwarding said items further along the production line.

In certain cases it may come to a situation in which items arrive faster at the loading section than they can be extracted from the closed loop conveyor at the unloading section. If the unloading capacity of a production line is not sufficient, then the process of feeding items onto the closed loop conveyor has to be stopped. This may cause delays in the flow of items along the production line and may reduce the overall production efficiency.

It is therefore an object of the invention to provide a continuous conveyor buffer for a production line which solves at least one of the aforementioned problems and which is capable of buffering items between the at least one loading section and the at least one unloading section.

This problem is solved for a continuous conveyor buffer as described above in that the buffer comprises at least one buffer capacity adjustment device with which the length of the carrier strand and the length of the return strand are adjustable relative to each other.

The continuous conveyor buffer according to the invention solves the above mentioned problem. If, for example, items cannot be unloaded at the at least one unloading section as fast as they can be loaded at the at least one loading section, then for example the length of the carrier strand may be increased such that the items may travel a longer path from the at least one loading section to the at least unloading section. This may provide enough time for items to be unloaded from the closed loop conveyor at the unloading section. This is particularly advantageous in the case that items arrive at the loading section in a continuous manner at a fixed speed. The increase of the length of the carrier strand automatically reduces the length of the return strand.

Another advantage of the buffer continuous conveyor buffer according to the invention is that the buffer may serve the principle of "first in -first out" (FIFO) such that items which are loaded first onto the closed loop conveyor can be unloaded first from the conveyor.

The buffer may also be seen as a balancer which balances the lengths of the carrier strand and the return strand with respect to each other. The at least one loading section and the at least one unloading section may be defined by access openings such as windows in a structure of the buffer.

In the following, further improvements of the invention are described. The additional improvements may be combined independently of each other, depending on whether a particular advantage of a particular improvement is needed in a specific application.

According to a first advantageous improvement, the at least one buffer capacity adjustment device may have at least one first and one second operating position, wherein, in the first operating position, the carrier strand is longer than in the second operating position and wherein in the first operating position, the return strand is shorter than in the second operating position. In order to allow a higher flexibility, the at least one buffer capacity adjustment device may have either a plurality of operating positions or the length of the strands may be adjusted continuously between two end positions.

In order to achieve a simple construction, the closed loop conveyor may comprise at least one closed loop carrier medium and a plurality of deflection pulleys, these are preferably stationary deflection pulleys, around which the at least one carrier medium is at least partly bent and wherein the at least one buffer capacity adjustment device comprises at least one deflection pulley around which the at least one carrier medium is at least partly bent and which is moveable with respect to the stationary deflection pulleys. Movement of the deflection pulleys of the upper capacity adjustment device away from the stationary pulleys or closer to said stationary pulleys will directly influence the length of the section of the carrier medium between the at least one deflection pulley of the buffer capacity adjustment device and the next stationary deflection pulleys to which the carrier medium is connected.

According to another advantageous improvement, the at least one buffer capacity adjustment device may comprise at least two deflection pulleys. In particular, the at least one buffer capacity adjustment device may comprise at least one carrier strand deflection pulley and at least one return strand deflection pulley, wherein the at least two deflection pulleys are functionally coupled to each other such that a movement of the at least one carrier strand deflection pulley away from the stationary deflection pulley which is closest to the carrier strand deflection pulley along the carrier medium is accompanied by a movement of the at least one return strand deflection pulley closer to the stationary deflection pulley which is closest to the return strand deflection pulley along the carrier medium vice versa. This arrangement may allow a simple adjustment of the length of the strands.

In order to achieve a space saving arrangement, both strand deflection pulleys may be arranged movable within the outer circumference of the remaining continuous conveyor buffer.

According to another advantageous improvement, the at least one carrier strand deflection and the at least one return strand deflection pulley may be moveable along linear paths. Consequently, the moveability of the pulleys can easily be achieved.

In order to further simplify the design, the above mentioned linear paths of the at least one carrier strand deflection pulley and the at least one return strand deflection pulley may be arranged coaxially with each other.

In order to couple the movement of the at least one carrier strand deflection pulley and the at least one return strand deflection pulley in a simple manner, the at least one buffer adjustment device may comprise at least one carrier strand deflection pulley and at least one return strand deflection pulley which are mechanically coupled with each other being moveable along a common path, in particular along a common linear path.

A mechanical coupling may easily be achieved by mounting the at least one carrier strand deflection pulley and the at least one return strand deflection pulley on a common mounting member. Thereby, the pulleys may be arranged with their axes of rotation being arranged parallel with each other. In order to achieve the movability of both pulleys, the common mounting member may be movable. In particular, the at least one common mounting member may be attached to a rail which allows linear movement of the common mounting member. The common mounting member may be motor driven.

In order to increase the buffer capacity of the continuous conveyor buffer, the continuous conveyor buffer may comprise at least two buffer capacity adjustment devices which each comprise at least one carrier strand deflection pulley and at least one return strand deflection pulley. The at least two buffer capacity adjustment devices may comprise at least one common mounting member onto which the at least two carrier strand deflection pulleys and the at least two return strand deflection pulleys are mounted.

The at least two buffer capacity adjustment devices may either be moved synchronously with each other such that a simple design and simple control of the continuous conveyor buffer may be achieved. In the alternative, the at least two buffer capacity adjustment devices may be moveable independently from each other such that the distribution of the strand length can be adjusted with a higher flexibility.

It should be noted that a coupling between the at least one carrier strand deflection pulley and the at least one return strand deflection pulley of the at least one buffer capacity adjustment device does not mandatorily have to be in a mechanical way. In the alternative, each of the pulleys may be mounted on a separate mounting member and the coupling of the individually moveable mounting members may be achieved by control means which control the movement of the mounting members.

In order to achieve a reliable transport of items in the closed loop conveyor, the at least one closed loop carrier medium may be a chain or a belt or another limp carrier medium. If the at least one closed loop carrier medium is a chain, then at least one deflection pulley is preferably formed by a pinion.

According to another advantageous improvement, the at least one closed loop conveyor may comprise at least one pair of two parallel closed loop carrier mediums. In particular, the at least one pair of two parallel closed loop carrier mediums may be congruent in the meaning of being similar with each other. The two parallel closed loop carrier mediums are preferably coupled with each other with respect to their movement.

In the case of two parallel closed loop carrier mediums, the continuous conveyor buffer preferably further comprises a parallel and similar set of stationary deflection pulleys. The continuous conveyor buffer may comprise at least one buffer capacity adjustment device for each of the parallel closed loop carrier mediums, wherein the two devices are similar with each other. In the alternative, the continuous conveyor buffer may comprise at least one buffer capacity adjustment device which is attached to both parallel closed loop carrier mediums. Said at least one buffer capacity adjustment device may comprise at least one carrier strand deflection pulley and at least one return strand deflection pulley for each closed loop carrier medium. Usage of at least one pair of two parallel closed loop carrier mediums may increase the working load of the continuous conveyor buffer.

In the case that at least two parallel closed loop carrier mediums are present, these are preferably spaced apart from each other in a direction perpendicular to planes which are spanned up by the single closed loop carrier mediums. Consequently, the at least two closed loop carrier mediums are spaced apart perpendicular to a transportation direction of the closed loop conveyor.

According to another advantageous improvement of an embodiment which comprises at least two parallel closed loop carrier mediums, each of the closed loop carrier mediums may be provided with at least one attachment member for attaching an item such as a carrier member or for directly attaching a work piece. Said at least one attachment member of one of the at least two closed loop carrier mediums may correspond to a corresponding attachment member of the at least one other closed loop carrier medium. Preferably these at least two corresponding attachment members are aligned with each other in particular perpendicular to the planes of the single closed loop carrier mediums.

In order to easily transport items on the closed loop conveyor, the closed loop conveyor may further comprise at least one carrier member which is captively connected to the at least one closed loop carrier medium. In particular, the at least one carrier member is preferably connected to two parallel closed loop carrier mediums. In order to easily align the at least one carrier member with respect to a gravitational direction, or in other words, to stabilize the orientation of the at least one carrier member, the at least one carrier member is preferably suspended at the at least one closed loop carrier medium. In particular, the at least one carrier member may be freely suspended or, in other words, hanging at the at least one closed loop carrier medium, more preferably being freely suspended at two parallel closed loop carrier mediums.

The at least one carrier member may comprise at least one receptacle for receiving items such as goods or work pieces, the at least one receptacle extending along an axial direction of the carrier member. Thereby, the axial direction may be defined as direction which extends perpendicular to a plane which is spanned by the at least one closed loop carrier medium. In the case of two parallel closed loop carrier mediums, the axial direction may extend between the at least two closed loop carrier mediums and be defined by the direction in which the two closed loop carrier mediums are spaced apart from each other. In the case of two closed loop carrier mediums, the planes of each closed loop carrier mediums are parallel with each other.

In order to easily and quickly load items to and unload items from the at least one receptacle, said receptacle is preferably accessible through at least one loading opening through which at least one item is insertable along the axial direction of the carrier member. Said at least one loading opening is preferably arranged at an axial end of the carrier member. More preferably, the at least one carrier member is provided with two loading openings, wherein each loading opening is arranged on one of the opposite axial ends of the carrier member. In particular, the at least one loading opening may have the same diameter as the at least one receptacle in a direction perpendicular to the axial direction.

For forming a solid and light weight carrier member, the at least one receptacle may be bordered by at least two webs, or in other words, cheeks which extend parallel with the axial direction and which are spaced apart from each other perpendicular. Consequently, items such as goods or work pieces may rest between both webs when being carried by the at least one carrying member. The at least two webs form the receptacle between them. Preferably, the at least two webs are spaced apart perpendicular to the axial direction and to a gravitational direction.

Seen along the axial direction, each of the at least two webs preferably broadens in the gravitational direction such that the at least one receptacle tapers in the same direction. Thereby, the at least one receptacle may be used for receiving differently sized items. Another advantage of such shape is that round items may be placed in the receptacle and may be fixated between the two webs. Especially in the case of round items, at least one of the webs may have a concave shape or, in other words having a curved surface such that the receptacle may have a round or even circular cross section seen in the axial direction.

At least one of the webs may be provided with at least one through hole, in particular in a side wall of the web. This may save weight of the carrier member and may also allow substances to enter and/or exit the carrier member if it is intended to treat items which are present in the carrier member by a certain treatment. For example, the carrier member with items in the receptacle may be placed in a bath for a treatment in liquids. Of course, other treatments, such as temperature treatments may also be possible.

In order to simplify the structure of the at least one carrier member, to save weight and to further allow treatments of items inside the carrier member, the at least one receptacle is preferably basically opened towards an upper side of the carrier member and/or towards a lower side of the carrier member. Thereby, the directions up and down refer to the gravitational direction if the carrier member is freely suspended.

In order to solidify the structure of the at least one carrier member and for facilitating the attachment of the at least one carrier member with at least one closed loop carrier element, the at least one carrier member may comprise at least two cross members which are arranged at the axial ends of the carrier member, wherein the at least two webs are connected by said cross members with each other and wherein the at least one carrier member is attachable to one closed loop carrier element by each cross member. Thereby, the term axial ends refers to the ends of the carrier member in the axial direction. Preferably, the at least two cross members are arranged above one loading opening each such that the cross members do not cover the at least one loading opening.

The at least one closed loop conveyor may be adapted for transporting metal cans and/or tops of metal cans. In particular, the at least one carrier member is adapted for transporting metal cans and/or tops of said metal cans. The tops of the metal cans may be in particular pull-open tops. The term metal can may refer to all kinds of cans such as tin cans, aluminum cans and to cans for different usages such as beverage cans or cans for storing other substances.

In particular the at least one carrier member may be adapted for carrying a stack of tops of metal cans wherein the tops are stacked on top of each other along the axial direction of the carrier member. Consequently, a plurality of tops of metal cans may be transported with one carrier member at the same time. Further, if the carrier member is provided with at least one through hole in at least one web or opened towards an upper side and/or the lower side as described above, the stack of tops of metal cans may be treated inside the carrier member.

The continuous conveyor buffer as described above in its various embodiments may be part of a production line for transporting and/or producing items such as goods or work pieces wherein the production line further comprises at least one loading member which is connected to the at least one loading section of the at least one continuous conveyor buffer, and at least one unloading member which is connected to the at least one unloading section of the at least one continuous conveyor buffer.

According to another embodiment of a continuous conveyor buffer and/or a production line as described above, the production line or the continuous conveyor buffer may further comprise at least one treatment area such as an interior of an oven or such as a liquid bath in which the at least one closed loop conveyor is at least partially arranged. In this case continuous conveyor buffer may be used to dynamically adjust the residence time of the items in the treatment area.

In the following, the invention and its improvements are described in greater detail using exemplary embodiments and with reference to the drawings. As described above, the various features shown in the embodiments may be used independently of each other in specific applications.

In the following figures, elements having the same function and/or the same structure will be referenced by the same reference numerals.

In the figures:
- Fig. 1: shows a schematic view of a continuous conveyor buffer according to the invention with a viewing axis perpendicular to a transportation direction of the conveyor;
- Fig. 2: shows the perspective view of a continuous conveyor buffer comprising two closed loop carrier mediums;
- Fig. 3: shows a perspective view of a preferred embodiment of a carrier member according to the invention.

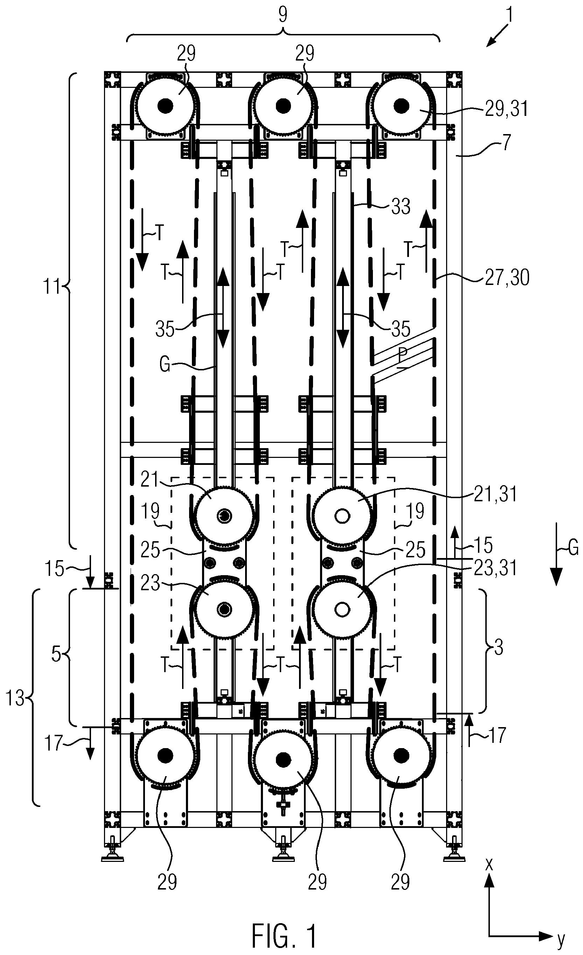

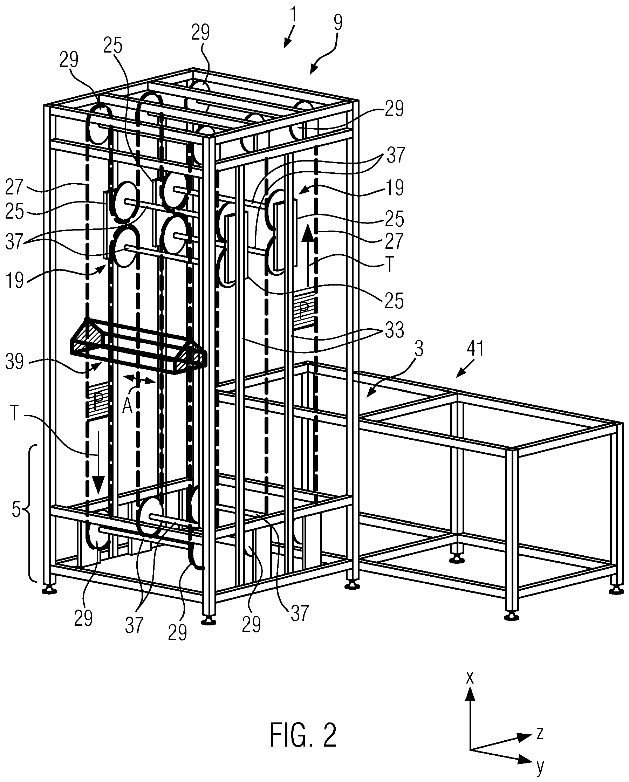

First, the general design of a continuous conveyor buffer according to the invention is described with respect to Fig. 1. This principle is also used for the continuous conveyor buffer as shown in Fig. 2 such that Fig. 1 may be seen as a side view of the buffer shown in Fig. 2. However, for clarity reasons, the continuous conveyor buffer according to the invention will be described with reference to a single closed loop carrier medium using Fig. 1.

A continuous conveyor buffer 1 according to the invention is shown in Fig. 1. The continuous conveyor buffer 1 may be part of a production line (not shown). The continuous conveyor buffer 1 comprises at least one loading section 3 at which items (not shown) may be loaded into the buffer 1 and at least one unloading section 5 for unloading items from the buffer 1. The positions of the loading section 3 and the unloading section 5 in Fig. 1 are just examples. The positions may also be at different places of the buffer 1. The sections 3 and 5 may for example be defined by windows in a frame structure 7 of the buffer 1. At the sections 3 and 5, the buffer 1 may be connected to a production line.

The continuous conveyor buffer 1 comprises at least one closed loop conveyor 9. The closed loop conveyor 9, in the following named conveyor 9, is adapted for transporting items along a pre-defined transport direction T. The transport direction T as indicated in Fig. 1 is only exemplary. If necessary, the transport direction T may also be reversed such that the conveyor 9 is adapted for transporting items in the opposite direction.

The conveyor 9 comprises a carrier strand 11 which extends from the loading section 3 to the unloading section 5 and a return strand 13 which extends from the unloading section 5 to the loading section 3, each along the transport direction T. In the case the transport direction T is reversed, the assignment of the carrier strand 11 and the return strand 13 will also be switched. A transport direction T and an assignment of the carrier strand 11 and the return strand 13 as described above and as shown in Fig. 1 may be useful in the case that items on the conveyor 9 are to be lifted up during transport. This may be beneficial if the items are to be inspected or to be treated during transport.

In the alternative, the transport direction t may be reversed. In this case, the carrier strand will be the part which is at the lower part of Fig. 1 and given the reference numeral 13. The same applies for the return strand which will then be represented by the strand in the upper part of the buffer 1 of Fig. 2 and which is indicated by reference numeral 11. Such arrangement may be advantageous if a large number of items or heavy items are to be transported on the conveyor 9. Consequently, the items would not have to be lifted upwards several times, but could instead be transported along the lower part of the conveyor 9. This may help to save energy for the operation of the conveyor 9.

The carrier strand 11 may be used for transporting items from the loading section 3 to the unloading section 5 on the conveyor 9 and the return strand 13 may be used for returning the conveyor 9 without items or with empty carrier members (not shown yet) to the loading section 3 in order to be supplied with new items for the carrier strand 11. The carrier strand 11 and the return strand 13 together form the closed loop conveyor 9.

The carrier strand 11 has a length 15 which is measured from the loading section 3 to the unloading section 5 along the course of the conveyor 9. Similarly, the return strand 13 has a length 17 which is measured from the unloading section 5 to the loading section 3 along the course of the conveyor 9. The lengths 15 and 17 are only indicated at their starting and end positions in Fig. 1.

The buffer 1 comprises two buffer capacity adjustment devices 19, in the following named devices 19. In the alternative, the buffer 1 according to the invention may also comprise a single device 19 or a plurality of more than two devices 19.

With the buffer capacity adjustment device 19, the length 15 of the carrier strand 11 and the length of the return strand 13 can be adjusted relative to each other. In the position as shown in Fig. 1, the carrier strand 11 has a length 15 which is larger than the length 17 of the return strand 13. Such distribution of the lengths may be beneficial in the case that items cannot be unloaded or further transported at a sufficient speed at the unloading section 5. Consequently, items which are loaded onto the conveyor 9 at the loading section 3 have to travel a long way until they reach the unloading section 5. During this transport, an unloading member of a production line may have sufficient time to get back into a state in which it is again capable of unloading items. If items can again be unloaded at a sufficient speed at the unloading section 5, then the length 15 of the carrier strand 11 may be decreased. At the same time, the length 17 of the return strand will increase.

The variation of the length 15 relative to the length 17 may also serve another purpose. If, for example, the conveyor buffer 1 is at least partly arranged in a treatment area, the time in which items on the conveyor 9 are present in the treatment area may be adjusted by adjusting the length 15 and 17 of the strands 11 and 13. Just by way of example, the part of the buffer 1 which houses the carrier strand 11 may partially be arranged inside an oven. Consequently, items which are transported along the transport direction T along the carrier strand 11 can be treated during transportation.

In the following, a preferred embodiment of the buffer capacity adjustment device 19 is described with respect to Fig. 1. With respect to clarity, only one of the identical formed devices 19 is described in detail. Each device 19 comprises two deflection pulleys: a carrier strand deflection pulley 21 and a return strand deflection pulley 23. Both pulleys 21 and 23 are rotatable mounted on a common mounting member 25.

The conveyor 9 comprises a closed loop carrier medium 27 which is indicated by the dashed line in Fig. 1. The closed loop carrier medium 27 is guided by deflection pulleys 29 of which the conveyor 9 comprises a plurality, said deflection pulleys 29 are preferably stationary, in particular with respect to the frame structure 7. Further, the closed loop carrier medium 27, in the following carrier medium 27 is guided by the carrier strand deflection pulley 21 and the return strand deflection pulley 23. The carrier medium 27 is preferably a limp medium. More preferably, the carrier medium 27 is a chain 30. In the alternative, the carrier medium 27 may also be formed by a belt or, as already mentioned, other limp elements. In the preferred case in which the carrier medium 27 is a chain 30, the stationary deflection pulleys 29 and the deflection pulley's 21 and 23 are preferably formed by pinions 31.

For transporting items on the conveyor 9, the carrier medium 27 may be driven by a motor or other driving means. For example, at least one of the stationary deflection pulleys 29 may be coupled to an electric motor for providing movement of the carrier member 27. The carrier strand deflection pulley 21 and the return strand deflection pulley 23 are functionally coupled with each other by a common mounting member 25 as already mentioned.

The common mounting member is movable with respect to the stationary deflection pulleys 29. In particular, the common mounting member 25 and therefore the carrier strand deflection pulley 21 and the return strand deflection pulley 23 can be moved with respect to the stationary deflection pulleys 29.

In the exemplary embodiment, the common mounting member 25 is movable parallel with the gravitational direction G.

A cartesian coordinate system shown in the lower right of Fig. 1 is intended to help to compare the different directions as shown in Fig. 1 with the ones as shown in the other Figures. The gravitational direction G is parallel with the X-direction of the coordinate system.

The common mounting member 25 is preferably lineally movable with the Gravitational direction. In order to allow a movement of the common mounting member 25, the buffer 1 preferably comprises a rail 33 for each common mounting member 25. The rail 33 may be fixated to the frame structure 7. The common mounting member 25 may be slidable mounted on the rail 33 and may be driven by a motor or an actuator (not shown). A movement of the common mounting member 25 upwards that is, against the gravitational direction G, will reduce the length 15 of the carrier strand 11 and increase the length 17 of the return strand 13 and vice versa. The rail 33 defines a common path 35 for both deflection pulleys 21 and 23.

As already mentioned, the buffer 1 as shown in Fig. 1 comprises two buffer capacity adjustment devices 19 and consequently two common mounting members 25, wherein each common mounting members 25 is provided with one carrier strand deflection pulley 21 and one return strand deflection pulley 23. Both common mounting members 25 are slidable mounted on rails 33 which are parallel with each other and parallel with the gravitational direction G. Both devices 19 may work synchronously or independently of each other.

In the case of both devices 19 working together synchronously, then the two common mounting members 25 may either be connected in a rigid way or the two common mounting members 25 may be combined into a single common mounting member (not shown) which carries both devices 19.

The carrier member 27 is arranged in a plane P which is in Fig. 1 parallel with the plane of the paper or, in other words, parallel with the X and Y direction of the coordinate system.

It should further be noted that the buffer 1 does not necessarily have to be orientated with respect to the gravitational direction G as described above. The buffer 1 as described with respect to Fig. 1 may also be used in any other orientation. For example, the buffer 1 may be used in an arrangement in which the transportation direction T and the paths 35 are orientated horizontally. In this case the viewing direction of Fig. 1 would be parallel with the gravitational direction G and show a top view of the buffer 1.

In the following, a buffer 1 according to the invention is described with respect to Fig. 2. For the sake of brevity, only the differences to the embodiment as described with respect to Fig.1 are described in detail.

The buffer 1 and the closed loop conveyor 9 comprise two parallel closed loop carrier mediums 27. Each of the closed loop carrier mediums 27 is arranged in a plane P, the planes P being indicated by hachures. The planes P run parallel with the X and Y direction.

Each of the closed loop carrier mediums 27 is connected to a plurality of stationary reflection pulleys 29 and to carrier strand deflection pulleys 21 and return strand deflection pulleys 23 of buffer capacity adjustment devices 19. Each carrier medium 27 and the thereto connected deflection pulleys 21, 23 and 29 is similar to the one as described with respect to Fig. 1. In other words, the embodiment as shown in Fig. 1 can be interpreted as a view along the Z direction of the embodiment as shown in Fig. 2.

The two closed loop carrier mediums 27 are arranged parallel with each other and are spaced apart from each other in a direction perpendicular to the planes P. The carrier mediums 27 are congruent with each other. Further, the two carrier members 27 and the corresponding deflection pulleys 21, 23 and 29 are aligned with each other seen in a direction perpendicular to the planes P.

In order to synchronize the movement of the two carrier mediums 27 and the corresponding pulleys 21, 23 and 29, each pulley which is connected to one of the carrier mediums 27 may be coupled with the opposite pulley of the other carrier medium 27 with which it is aligned. This coupling is preferably achieved by mechanical connection via common axles 37 which extend perpendicular to the planes P.

Said common axles 37 may be provided for the stationary deflection pulleys 29 and also for the carrier strand deflection pulleys 21 and the return strand deflection pulleys 23. For the deflection pulleys 21 and 23 of a buffer capacity adjustment device 19, not only the rotational movement of the pulleys may be synchronized via the common axles 37, but also the translational movement along the rails 33.

It should be noted that a set of two common mounting members 25 which are arranged opposite to each other in the direction perpendicular to the planes P, the carrier strand deflection pulley 21 and the return strand deflection pulleys 23 which are connected to the two common mounting members 25 may together form a buffer capacity adjustment device 19 for the closed loop conveyor 9. The axles 37 which couple the oppositely arranged pulleys 21 and the oppositely arranged pulleys 23 may also be part of the device 19. As a consequence, the buffer 1 as described with respect to Fig. 2 comprises two buffer capacity adjustment devices 19 wherein each buffer capacity adjustment device 19 comprises two common mounting members 25, two carrier strand deflection pulleys 21, two return strand deflection pulleys 23 and two common axles 37 for the pulleys 21 and 23.

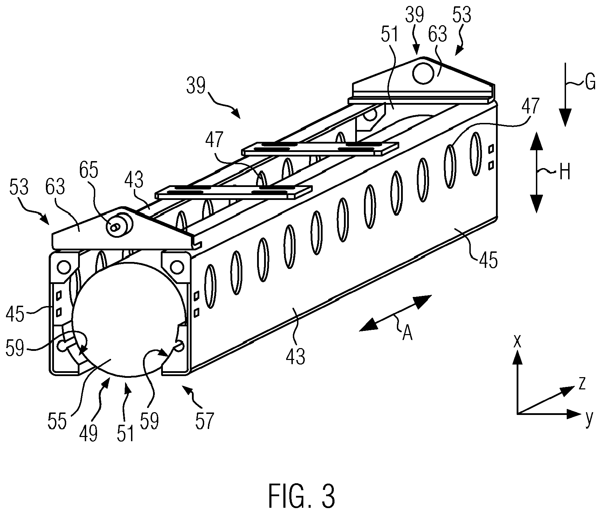

The conveyor 9 preferably comprises at least one carrier member 39 which is captively connected to both closed loop carrier mediums 27. The carrier member 39 is only indicated in Fig. 2 and will be described in greater detail later on with respect to Fig. 3. The carrier member 39 is preferably freely suspended at the two closed loop carrier mediums 27 and extends along an axial A direction which is perpendicular to the planes P and therefore parallel with the Z-direction in Fig. 2.

The carrier member 39 may be continuously transported along the transportation direction T when the closed loop carrier mediums 27 are moved. The carrier member 39 may be used for transporting items such as goods or work pieces from the loading section 3 to the unloading section 5 or the other way round.

Just by way of example, a loading member 41 which may be a part of a production line is shown. The loading member 41 may be used for loading items on the carrier member 39.

Similarly, an unloading member (not shown) which is adapted to unload items from the carrier member 39 may be present at the unloading section 5.

In the alternative, a loading member 41 may be used for attaching carrier members 39 to the conveyor 9. Therefore, the closed loop carrier mediums 27 may be provided with attachment members (not shown) to which a carrier member 39 may be attached to. For example, the attachment members may be formed as hooks or pins which are shaped such that a carrier member can be attached to them.

In the following, a carrier member 39 which was only indicated in Fig. 2 is described in greater detail with respect to Fig. 3.

The carrier member 39 has an overall longitudinal shape extending along the axial direction A. The carrier member 39 is basically formed by two webs 43 which also extend along the axial direction A. The webs 43 are arranged parallel with each other and are spaced apart from each other perpendicular to the axial direction A.

Side walls 45 of the webs 43 which extend parallel with the axial direction A and with a height direction H. The height direction H is parallel with the gravitational direction G in the case of a freely suspended carrier member 39. The side walls 45 are preferably provided with through holes 47. The side walls 45 of the webs 43 are arranged parallel with each other.

Between the webs 43, a receptacle 49 for receiving items such as goods or work pieces is formed. The receptacle 49 extends along the axial direction A. The receptacle 49 is accessible through two loading openings 51 which are arranged on both opposing axial ends 53 of the carrier member 39.

items may be loaded along the axial direction A through one of the loading openings 51 into the receptacle 49. Just by way of example, a stack 55 of tops of metal cans is indicated as a cylinder in Fig. 3. Tops of metal cans may be stacked on top of each other along the axial direction A and may be pushed into the receptacle 49 for loading the carrier member 39. Fur unloading, the stack 55 may be pushed along the axial direction A such that the stack 55 leaves the receptacle 49 along the axial direction A through one of the loading openings 51.

The carrier member 37 and/or the loading member 41 may be provided with at least one sensor (not shown) that is capable of counting items which are loaded into or unloaded from the receptacle 49. The at least one sensor may be a mechanical, optical, inductive or other suitable sensor. Counting the items may facilitate monitoring the transport of items. If also the number of carrier members 37, which pass a certain point of the buffer 1, is monitored, this information - in combination with the knowledge of the number of items in each carrier member 37 - may provide a method for tracking the items on the conveyor 9.

In particular for the case that round items such as the aforementioned tops of metal cans are to be carried with the carrier member 39, the webs 43 may broaden along the height direction H in a cross section seen along the axial direction A towards the lower side 57 of the carrier member 39. As a consequence, the receptacle 49 tapers towards said lower side 57 seen along the axial direction A. The webs 43 may be provided with concaved inner sides 59 which may facilitate receiving round items.

The receptacle 49 is opened towards to lower side 57 and the upper side 61 of the carrier member 36. The terms lower side and upper side refer to the height direction H and the gravitational direction G. The opened receptacle 49 may save weight and may also allow a treatment of items which are arranged in the receptacle 49.

The carrier member 39 is provided with a cross member 63 at each axial end 53. Each cross member 63 extends perpendicular to the axial direction A and perpendicular to the side walls 45, connecting the two webs 43 with each other. Further, each cross member 63 is provided with one suspension means 65 for suspending the carrier member 39 at the two closed loop carrier medium 27.

Each suspension means 65 can be attached to one of the closed loop carrier mediums 27. The cross members 63 are arranged on the upper side 61 of the carrier member 39 such that the remaining carrier member 39, in particular the webs 43, are suspended and hang freely from the carrier mediums 27.

### REFERENCE NUMERALS

- 1: Continuous conveyor buffer
- 3: Loading section
- 5: Unloading section
- 7: Frame structure
- 9: Closed loop conveyor
- 11: Carrier strand
- 13: Return strand
- T: Transport direction
- 15: Length of the carrier stand
- 17: Length of the return stand
- 19: Buffer capacity adjustment device
- 21: Carrier strand deflection pulley
- 23: Return strand deflection pulley
- 25: Common mounting member
- 27: Closed loop carrier medium
- 29: Stationary deflection pulleys
- 30: Chain
- 31: Pinions
- 33: Rail
- 35: Path
- P: Plane
- G: Gravitational direction
- 37: Axle
- 39: Carrier member
- 41: Loading member
- 43: Web
- 45: Side walls
- 47: Through holes
- 49: Receptacle
- 51: Loading openings
- 53: Axial ends
- 55: Stack of tops
- 57: Lower side
- 59: Inner sides
- 61: Upper side
- 63: Cross member
- 65: Suspension means
- A: Axial direction
- G: Gravitational direction
- H: Height direction
- T: Transport direction

## Claims

1. Continuous conveyor buffer (1) for a production line, the continuous conveyor buffer (1) comprising at least one closed loop conveyor (9), at least one loading section (3) for loading items (55) onto the closed loop conveyor (9), and at least one unloading section (5) for unloading items (55) from the closed loop conveyor (9), the closed loop conveyor (9) comprising a carrier strand (11) extending from the at least one loading section (3) to the at least one unloading section (5) and a return strand (13) extending from the at least one unloading section (5) to the at least one loading section (3), the carrier strand (11) and the return strand (13) together forming the closed loop conveyor (9), **characterized in that** the continuous conveyor buffer (1) further comprises at least one buffer capacity adjustment device (19) with which the length (15) of the carrier strand and the length (17) of the return strand (13) are adjustable relative to each other.

2. Continuous conveyor buffer (1) according to claim 1, **characterized in that** the closed loop conveyor (9) comprises at least one closed loop carrier medium (27) and a plurality of deflection pulleys (29) around which the at least one closed loop carrier medium (27) is at least partly bent and that the at least one buffer capacity adjustment device (19) comprises at least one deflection pulley (21, 23) around which the at least one closed loop carrier medium (27) is at least partly bent and which is moveable with respect to the deflection pulleys (29).

3. Continuous conveyor buffer (1) according to claim 2, **characterized in that** the at least one buffer capacity adjustment device (19) comprises at least one carrier strand deflection pulley (21) and at least one return strand deflection pulley (23) which are mechanically coupled with each other being moveable along a common linear path (35).

4. Continuous conveyor buffer (1) according to claim 3, **characterized in that** the continuous conveyor buffer (1) comprises at least two buffer capacity adjustment devices (19) which each comprises at least one carrier strand deflection pulley (21) and at least one return strand deflection pulley (23).

5. Continuous conveyor buffer (1) according to any of claims 2 to 4, **characterized in that** the at least one closed loop carrier medium (27) is a chain (30) or a belt.

6. Continuous conveyor buffer (1) according to any of claims 2 to 5, **characterized in that** the at least one closed loop conveyor (9) comprises at least one pair of two parallel closed loop carrier mediums (27).

7. Continuous conveyor buffer (1) according to claim 6, **characterized in that** the at least two parallel closed loop carrier mediums (27) are spaced apart from each other in a direction perpendicular to planes (P) which are spanned by the single closed loop carrier mediums (27).

8. Continuous conveyor buffer (1) according to any of the aforementioned claims, **characterized in that** the closed loop conveyor (9) further comprises at least one carrier member (39) which is captively connected to the at least one closed loop carrier medium (27).

9. Continuous conveyor buffer (1) according to claim 8, **characterized in that** the at least one carrier member (39) is suspended at the at least one closed loop carrier medium (27).

10. Continuous conveyor buffer (1) according to claim 8 or 9, **characterized in that** the at least one carrier member (39) comprises at least one receptacle (49) for receiving items (55), wherein the at least one receptacle (49) extends longitudinally along an axial direction (A) of the carrier member (39).

11. Continuous conveyor buffer (1) according to claim 10, **characterized in that** the at least one receptacle (49) is accessible through at least one loading opening (51) through which at least one item (55) is insertable along the axial direction (A) of the carrier member (39).

12. Continuous conveyor buffer (1) according to claim 10 or 11, **characterized in that** the at least one receptacle (49) is bordered by at least two webs (43) which extend parallel with the axial direction (A) and which are spaced apart from each other perpendicular to the axial direction (A).

13. Continuous conveyor buffer (1) according to any of claims 10 to 12, **characterized in that** the at least one receptacle (49) is basically opened towards an upper side (61) of the carrier member (39) and/or towards a lower side (57) of the carrier member (39).

14. Continuous conveyor buffer (1) according to any of claims 10 to 13, **characterized in that** the at least one carrier member (39) comprises at least two cross members (63) which are arranged at axial ends (53) of the carrier member (39), wherein the at least two webs (43) are connected by said cross members (63) with each other, and wherein the at least one carrier member (39) is attachable to one closed loop carrier element (27) by each cross member (63).

15. Continuous conveyor buffer (1) according to any of claims 1 to 14, **characterized in that** the at least one closed loop conveyor (9) is adapted for transporting metal cans and/or tops of metal cans.
